# EUROPÄISCHE PATENTANMELDUNG

(11) **EP 0 708 157 A2**
(43) Veröffentlichungstag der Anmeldung: **24.04.1996**
(21) Anmeldenummer: 95116079.5
(22) Anmeldetag: 12.10.1995
(51) Int. Cl.: C09D 167/06, C08F 283/01

(54) **Emissionsarmes Gelcoat-Polyesterharz**

(30) Priorität: 20.10.1994 DE 4437499
(71) Anmelder: BASF AKTIENGESELLSCHAFT, D-67056 Ludwigshafen (DE)
(72) Erfinder: Gerth, Dale, Dr., D-67346 Speyer (DE); Schwiegk, Stefan, Dr., D-67433 Neustadt (DE); Folda, Thomas, Dr., D-67435 Neustadt (DE); Allspach, Thomas, Dr., D-67317 Altleiningen (DE)

(57) **Zusammenfassung**

Die Erfindung betrifft ein emissionsarmes Gelcoatharz auf Basis eines ungesättigten Polyesterharzes, welches tert.-Butylstyrol als Comonomer enthält.

## Beschreibung

Die Erfindung betrifft ein emissionsarmes Gelcoatharz auf Basis eines ungesättigten Polyesterharzes (UP-Harze).

Bei der Verarbeitung von glasfaserverstärkten UP-Harzen in Formen, z.B. durch Handlaminieren, Naßpressen oder nach dem Resin Transfer Moulding (RTM)-Verfahren, erhält man Formkörper mit glatter, glänzender Oberfläche nur dann, wenn vorher die Oberfläche der Form mit einem sogenannten Gelcoatharz versehen wurde. Als Gelcoatharze werden üblicherweise ungesättigte Polyesterharze verwendet, die Styrol als Comonomer enthalten. Das Harz wird auf die erwärmte Formoberfläche durch Aufstreichen, Aufspritzen oder Aufsprühen aufgebracht. Dabei können größere Mengen Styrol verdunsten, was zu starker Geruchsbelästigung führt. Behördliche Auflagen machen aufwendige Absauganlagen notwendig.

Man hat deshalb verschiedentlich Styrol durch andere Comonomere, vorzugsweise durch hochsiedende Methacrylsäureester ersetzt. Entsprechende emissionsarme UP-Harze härten jedoch nicht vollständig aus, so daß Gelcoats auf dieser Basis eine zu geringe Zugdehnung und Zugfestigkeit aufweisen. Außerdem zeigen derartige Gelcoats eine verhältnismäßig hohe Wasseraufnahme.

Der Erfindung lag daher die Aufgabe zugrunde, ein emissionsarmes UP-Harz für Gelcoats bereitzustellen, welches im ausgehärteten Zustand abgewogen gute mechanische Eigenschaften, insbesondere eine gute Festigkeit und Dehnung aufweist. Dabei sollte das Styrol durch ein geruchsarmes Comonomeres ersetzt werden, und das Harz sollte eine verhältnismäßig niedrige Viskosität aufweisen. Außerdem sollte die Wasseraufnahme der gehärteten UP-Harze verringert werden.

Es wurde nun gefunden, daß diese Aufgabe gelöst wird, wenn man als Comonomer tert.-Butylstyrol verwendet.

Gegenstand der Erfindung ist demzufolge ein emissionsarmes Gelcoatharz auf Basis eines ungesättigten Polyesterharzes, welches 10 bis 80 Gew.-% tert. -Butylstyrol als Comonomer enthält.

Tert.-Butylstyrol wird in einigen Patentveröffentlichungen neben Styrol und anderen substituierten Styrolen in einer Liste von geeigneten Comonomeren für ungesättigte Polyesterharze aufgeführt Es ist jedoch nirgends als geeignetes Comonomer für emissionsarme Gelcoatharze differenziert oder beispielhaft beschrieben.

Ungesättigte Polyester sind die üblichen Kondensationsprodukte aus mehrwertigen, insbesondere zweiwertigen Carbonsäuren und deren veresterbaren Derivaten, insbesondere deren Anhydriden und mehrwertigen, insbesondere zweiwertigen Alkoholen, die gegebenenfalls zusätzlich Reste einwertiger Carbonsäuren, einwertiger Alkohole oder Reste von Hydroxycarbonsäuren enthalten, wobei zumindest ein Teil der Reste über ethylenisch ungesättigte copolymerisierbare Gruppen verfügen muß. Als mehrwertige, insbesondere zweiwertige, gegebenenfalls ungesättigte Alkohole eignen sich die üblichen insbesondere acyclische Gruppen, cyclische Gruppen als auch beide Arten von Gruppen aufweisende Alkandiole und Oxaalkandiole, wie z.B. Ethylenglykol, Propylenglykol-1,2, Propandiol-1,3, Butylenglykol-1,3, Butandiol-1,4, Hexandiol-1,6, Neopentylglykol, Diethylenglykol, Triethylenglykol, Polyethylenglykol, Cyclohexandiol-1,2, 2,2-Bis-(p-hydroxycyclohexyl)-propan, Trimethylolpropanmonoallylether oder Butendiol-1,4. Bevorzugt sind Ethylenglykol, Propylenglykol, Diethylenglykol, Dipropylenglykol, Neopentylglykol und deren Mischungen.

Ferner können ein-, drei- oder höherwertige Alkohole, wie z.B. Ethylhexanol, Fettalkohole, Benzylalkohole, 1,2-Di-(allyloxy)-propanol-3, Glycerin, Pentaerythrit oder Trimethylolpropan in untergeordneten Mengen mitverwendet werden. Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren bzw. deren kondensierbaren Derivaten umgesetzt.

Geeignete Carbonsäuren bzw. deren Derivate sind zweibasische olefinisch ungesättigte, vorzugsweise α,β-olefinisch ungesättigte Carbonsäuren, wie z.B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte, sowie aromatische Carbonsäuren, wie z.B. Bernsteinsäure, Glutarsäure, α-Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure, Endomethylentetrachlorphthalsäure oder Hexachlorendomethylentetrahydrophthalsäure einkondensiert sein, ferner ein-, drei- und höherbasische Carbonsäuren, wie z.B. Ethylhexansäure, Fettsäuren, Methacrylsäure, Propionsäure, Benzoesäure, 1,2,4-Benzoltricarbonsäure oder 1,2,4,5-Benzoltetracarbonsäure. Vorzugsweise verwendet werden Maleinsäure bzw. deren Anhydrid, Adipinsäure, o-Phthalsäure und Isophthalsäure.

Das Molverhältnis von ungesättigten zu gesättigten Dicarbonsäuren liegt vorzugsweise zwischen 1:0 und 1:2,5.

Die ungesättigten Polyester besitzen Säurezahlen von 5 bis 80, vorzugsweise von 10 bis 60 und mittlere Molekulargewichte von ungefähr 400 bis 6000, vorzugsweise von etwa 800 und 2000.

Die ungesättigten Polyester werden im allgemeinen durch Schmelzkondensation oder Kondensation unter azeotropen Bedingungen bei Temperaturen zwischen 150 und 220°C aus ihren Ausgangskomponenten nach kontinuierlichen oder diskontinuierlichen Verfahren hergestellt.

Eine bessere Aushärtung und damit verbesserte mechanische Eigenschaft erhält man, wenn man den ungesättigten Polyester mit Methacrylsäure bzw. Glycidylmethacrylat umsetzt. Im ersten Fall geht man aus von einem Polyester, der mit Diol-Überschuß hergestellt wurde, im anderen Fall von einem Polyester, der mit Dicarbonsäure-Überschuß hergestellt wurde. In beiden Fällen wird die Reaktion bei erhöhten Temperaturen, vorzugsweise bei 80 bis 160°C, in Gegenwart von basischen bzw. sauren Katalysatoren, z.B. organischen Aminen bzw. Sulfonsäuren, durchgeführt.

Um eine besonders niedrige Viskosität zu bewirken, führt man bei der Herstellung des Polyesters im Anschluß an die Polykondensation einen mindestens teilweisen Verschluß von Hydroxylendgruppen durch Umsetzung mit monofunktionellen Säuren, z.B. Benzoesäure oder Ethylhexansäure durch (siehe EP-A 475 661). Der Endgruppenverschluß kann auch in einer Stufe durch Zusatz von Monocarbonsäuren oder Monoalkoholen bei der Polykondensation erfolgen.

Die Gelcoatharze enthalten erfindungsgemäß 10 bis 80, vorzugsweise 20 bis 50 Gew.-% tert.-Butylstyrol. Darunter sind p-tert.-Butylstyrol, m-tert.-Butylstyrol und deren Mischungen (vorzugsweise im Verhältnis 95:5 oder höher) zu verstehen.

Das tert.-Butylstyrol kann auch im Gemisch mit anderen hochsiedenden Comonomeren eingesetzt werden, insbesondere mit (Meth-)Acrylsäureestern mit einem Siedepunkt oberhalb von 100, vorzugsweise oberhalb von 150°C. Es hat sich überraschenderweise gezeigt, daß Mischungen von UP-Harzen mit (Meth-)Acrylsäureestern dann rasch und vollständig aushärten, wenn sie tert. -Butylstyrol zugemischt enthalten. Außerdem werden Formkörper mit verbesserter witterungsbeständigkeit erhalten.

Bevorzugt sind Methacrylsäureester, wie z.B. 2-Ethylhexylmethacrylat, Phenylethylmethacrylat, Ethyltriglykolmethacrylat, N,N-Dimethylaminoethylmethacrylat, N,N-Dimethylaminomethylmethacrylat, 1,4-Butandioldimethacrylat, Acetacarboxyalkylmethacrylat, 1,2-Ethandioldimethacrylat, Diethylenglykoldimethacrylat, Methoxypolyethylenglykolmonomethacrylat, Trimethylolpropantrimethacrylat,Besonders bevorzugt sind Butandioldimethacrylat, Tetrahydrofurfurylmethacrylat, Isobornylmethacrylat, 2-Hydroxyethylmethacrylat, Hydroxypropylmethacrylat und Dicyclopentyloxyethylmethacrylat. Acrylsäureester sind weniger bevorzugt, da sie meist hautreizend sind. Auch der Zusatz von Styrol in geringen Mengen, vorzugsweise weniger als 20 Gew.-%, soll nicht ausgeschlossen sein.

Die Gelcoatharze enthalten übliche radikalisch wirkende Polymerisationsinitiatoren, z.B. Dibenzoylperoxid und Methylethylketonperoxid.

Die erfindungsgemäßen Gelcoatharze enthalten zweckmäßigerweise 0,03 bis 3, vorzugsweise 0,1 bis 2 Gew.-% einer oberflächenaktiven Substanz als Trennmittel. Diese bewirkt, daß die Formoberfläche beim Auftrag des Gelcoats besser benetzt wird, vor allem aber erleichtert sie die Ablösung der Gelcoatschicht von der Formoberfläche nach der Aushärtung des Formteils. Geeignete oberflächenaktive Substanzen sind z.B. Salze und Ester langkettiger Fettsäuren sowie Polyether mit Hydroxyl-, Carobxyl- oder Amin-Endgruppen.

Die Gelcoatharze enthalten ferner die üblichen Zusatzstoffe, wie Thixotropiermittel (z.B. feinpulvrige Kieselsäure), Inhibitoren (z.B. Hydrochinon), Füllstoffe (z.B. Kreide), Beschleuniger, z.B. Cobaltsalze oder Amine und Pigmente.

Um einen guten Auftrag auf die Formoberfläche zu ermöglichen, sollte das Gelcoatharz (ohne Additive) eine Viskosität (bei 23°C) von 100 bis 1500 [mPa·s], vorzugsweise von 100 bis 600 [mPa·s] aufweisen.

Die Gelcoatharze werden nach bekannten Methoden auf die Formoberfläche als 300 bis 600 µm dicke Schicht aufgetragen. Darauf wird dann das faservestärkte UP-Harz-Laminat aufgelegt und unter üblichen Bedingungen zu einem Formteil laminiert oder verpreßt.

### Beispiel

1176 g (12 Mol) Maleinsäureanhydrid, 1510 g Phthalsäureanhydrid (10,2 Mol), 870 g Dipropylenglykol (6,5 Mol), 1505 g Neopentylglykol (14,5 Mol) und 0,373 g Hydrochinon wurden in ein Reaktionsgefäß eingewogen, das mit einem Thermometer, einem ständig arbeitenden Rührwerk und einer Vorrichtung zum Einleiten eines Stickstoffstromes ausgestattet war.

Die Mischung wurde langsam über 4 Stunden auf 200°C erhitzt und so lang dabei gehalten, bis die Säurezahl einer entnommenen Probe 70 mg KOH/g betrug.

Das Harz wurde auf 90°C abgekühlt und 27 g N,N-Dimethylbenzylamin und 2,2 g Di-tert.butyl-4-methylphenol wurden zugegeben. 788 g (5,5 Mol) Glycidylmethacrylat wurden über 20 Min. zugetropft. Die Mischung wurde so lang dabei gehalten, bis die Säurezahl einer entnommenen Probe weniger als 10 mg KOH/g betrug.

55 Teile des Harzes, 15 Teile Isobornylmethacrylat, 5 Teile 1,4-Butandioldimethyacrylat und 25 Teile tert.-Butylstyrol wurden bei 80°C zusammengerührt und schnell auf Raumtemperatur abgekühlt. Es wurden Platten hergestellt, wobei 2 % Methylethylketonperoxid und 0,8 % Co-Beschleuniger (1 % in Styrol) zugesetzt wurden und das Gemisch in eine 20 cm x 20 cm x 4 mm Form gegossen. Platten wurden 24 h bei Raumtemperatur gehärtet und 24 h bei 120°C nachgehärtet. Der erhaltene Formkörper wies eine Zug-Bruchfestigkeit (nach DIN 53 504) von 55 MPa, eine Zug-Bruchdehnung von 2,8 % und eine Zugmodul von 3100 MPa auf.

## Patentansprüche

1. Emissionsarmes Gelcoatharz auf Basis eines ungesättigten Polyesterharzes, dadurch gekennzeichnet, daß dieses 10 bis 80 Gew.-% tert.-Butylstyrol als Comonomer enthält.

2. Gelcoatharz nach Anspruch 1, dadurch gekennzeichnet, daß es
mindestens 40 Gew.-% eines (Meth-)Acrylat-Endgruppentragenden ungesättigten Polyesters,
10 bis 50 Gew.-% tert.-Butylstyrol und
10 bis 50 Gew.-% eines (Meth-)Acrylsäureesters mit einem Siedepunkt oberhalb 120°C
enthält.

3. Gelcoatharz nach Anspruch 1, dadurch gekennzeichnet, daß es 0,03 bis 3 Gew.-% einer oberflächenaktiven Substanz als Trennmittel enthält.

4. Gelcoatharz nach Anspruch 1, dadurch gekennzeichnet, daß das Harz eine Viskosität bei 23°C zwischen 100 und 1500 [mPa·s] aufweist.

5. Gelcoatharz nach Anspruch 1, dadurch gekennzeichnet, daß der ungesättigte Polyester mindestens teilweise endgruppen-verkappt ist und eine Hydroxylzahl von 5 bis 40 aufweist.
